# EUROPEAN PATENT APPLICATION

(11) **EP 2 226 609 A2**
(43) Date of publication of application: **08.09.2010**
(21) Application number: 10151885.0
(22) Date of filing: 28.01.2010
(51) Int. Cl.: G01B 15/00, G01N 23/04, G06T 7/00

(54) **Nondestructive detection of anomalies (foreign objects, anomal dimensions) of an engine for example by means of computed tomography**

(30) Priority: 30.01.2009 US 363458
(71) Applicant: General Electric Company, Schenectady, NY 12345 (US)
(72) Inventor: Nightingale, Gerald Bernard, West Chester, OH 45069 (US); Galish, Andrew Joseph, West Chester, OH 45069 (US); Little, Francis Howard, Cincinnati, OH 45244 (US)
(74) Representative: Gray, Thomas

(57) **Abstract**

A system (40) for non-destructive examination of components within an assembly is provided. The system (40) includes a computer having a display (14) and memory (16), the computer (12) is configured to extract a point cloud (410,420) from an image of at least a portion of the assembly (102), register the point cloud to a CAD coordinate system (104), determine points in the point cloud of the image that are more than a selected distance from surfaces on a CAD model (400) of the assembly utilizing the same CAD coordinate system (106), and utilize the determined points (464) to detect the presence of anomalies within the assembly.

## Description

### BACKGROUND OF THE INVENTION

The field of this disclosure relates generally to non-destructive examination of an engine, and more particularly to the detection of anomalies in an assembled engine.

An engine, for example, a turboshaft engine, includes a plurality of components assembled to form the engine. Anomalies in individual components, inaccuracy in the placement of components relative to other components, and the presence of foreign matter within the engine may all reduce performance of the engine and/or prevent proper operation of the engine. Although the plurality of individual components may be determined to each match specifications for the components, once assembled, they may not be positioned relative to one another as designed.

Non-destructive examination of components within an engine can be performed by one or more known techniques, which include, for example, radiography, ultrasonics, and acoustic emission. Computed tomography adds the ability to view cross sections of the engine being examined.

### BRIEF DESCRIPTION OF THE INVENTION

In one aspect, a method for non-destructive examination of components within an assembly is provided. The method includes producing an image of at least a portion of the assembly, extracting a point cloud of the image, registering the point cloud to a CAD coordinate system, and determining points in the point cloud of the image that are more than a selected distance from surfaces on a corresponding CAD model utilizing the same CAD coordinate system. The method also includes utilizing the determined points to detect the presence of anomalies within the assembly.

In another aspect, a system for non-destructive examination of components within an assembly is provided. The system includes a computer having a display and memory. The computer is configured to extract a point cloud from an image of at least a portion of the assembly and register the point cloud to a CAD coordinate system. The computer is also configured to determine points in the point cloud of the image that are more than a selected distance from surfaces on a CAD model of the engine utilizing the same CAD coordinate system and to utilize the determined points to detect the presence of anomalies within the assembly.

In yet another aspect, a machine-readable medium having recorded thereon instructions configured to instruct a computer to extract a point cloud from an image of at least a portion of an assembly is provided. The instructions are configured to instruct the computer to register the point cloud to a CAD coordinate system and determine points in the point cloud of the image that are more than a selected distance from surfaces on a CAD model of the engine utilizing the same CAD coordinate system. The instructions are also configured to instruct the computer to utilize the determined points to detect the presence of anomalies within the assembly.

### BRIEF DESCRIPTION OF THE DRAWINGS

There follows a detailed description of embodiments of the invention by way of example only with reference to the accompanying drawings, in which:

Figure 1 is a block diagram of a device for use in a non-destructive examination of an assembly;

Figure 2 is a block diagram of a system for non-destructive examination of an assembly;

Figure 3 is a flow chart of a method for non-destructive examination of an assembly;

Figure 4 is a flow chart of a method for extracting a point cloud from an assembly being examined;

Figure 5 is an example of a 3-D image produced using the system and methods described herein;

Figure 6 is an example of a two-dimensional image of a portion of an engine;

Figure 7 is an expanded view of a first portion of the image shown in Figure 6;

Figure 8 is an expanded view of a second portion of the image shown in Figure 6;

Figure 9 is a CAD model of an engine component;

Figure 10 is a point cloud produced using the systems and methods described herein of the engine component shown in Figure 9;

Figure 11 is a comparison of the point cloud shown in Figure 10 and a point cloud produced from the CAD model shown in Figure 9;

Figure 12 is an image of an anomaly detected in the engine component being examined;

Figure 13 illustrates a method for creating a point cloud in two dimensions; and

Figure 14 is an illustration of a portion of an assembled engine.

### DETAILED DESCRIPTION OF THE INVENTION

Various embodiments described herein include a method for non-destructive testing, and more particularly, a method for non-destructive testing of an engine. Technical effects of the various embodiments include detecting anomalies within an assembled engine. Anomalies may include variations in a distance between engine components, variations in a position of a component within the engine, and the presence of a foreign object within the engine. Another technical effect of the various embodiments includes providing troubleshooting support in the event an engine fails to perform as expected. It will be appreciated that configurations described herein can be used to produce engines determined to be assembled as a designer intended.

In some embodiments described herein, a point cloud is extracted from a computed tomography (CT) three-dimensional (3-D) model showing all component boundaries, including boundaries of features that are not there by design. With a CAD model of the engine there is the opportunity to use the CT 3-D model for subtracting that point data from the CAD model of the engine in question leaving any anomaly in isolation. Manual selection of thresholds and tolerances can be performed for point cloud creation. Thus, technical effects of various configurations described herein include the creation of an image of an anomaly inside an assembled engine. Another technical effect of some configurations described herein is the recognition and determination of such anomalies. More particularly, a complete point set of data from an X-ray CT system (for example) is obtained. The point cloud is registered to a CAD model. The point cloud is reduced by removing points within a specified distance to any CAD surface. The remaining points are identified as anomalies.

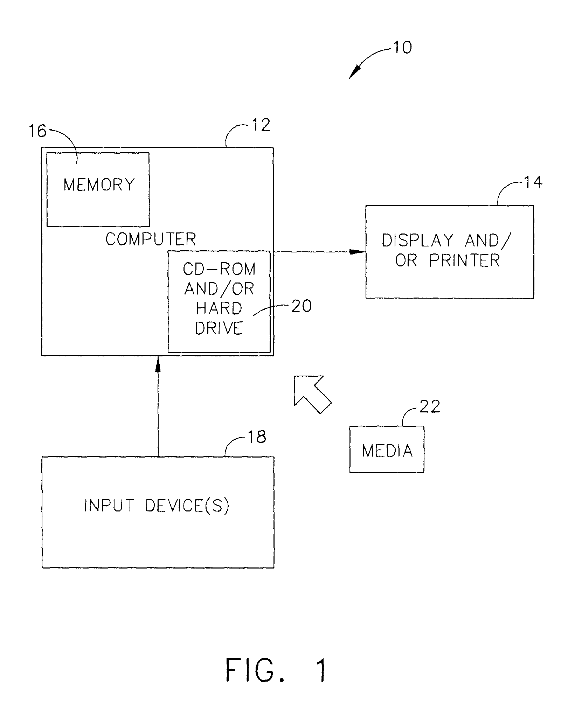

Figure 1 is a block diagram of a device 10 for non-destructive examination of an engine. In the exemplary embodiment, device 10 includes a computer 12 having a display 14 (which may be, for example, an electronic display or a printer) and a memory 16. Computer 12 also may include one or more input devices 18, such as a keyboard, mouse, touch screen, light pen, etc., and one or more media devices 20 that can supply or read instructions, data, and/or data representing images, such as a hard disk, CD-ROM, floppy disk drive, CD-RW, DVD-ROM, DVD-RW, DVD+RW, flash memory, etc. In some configurations, computer 12 is connected to a network (not shown in Figure 1) from which it may receive and/or transmit instructions, data, or data representing images.

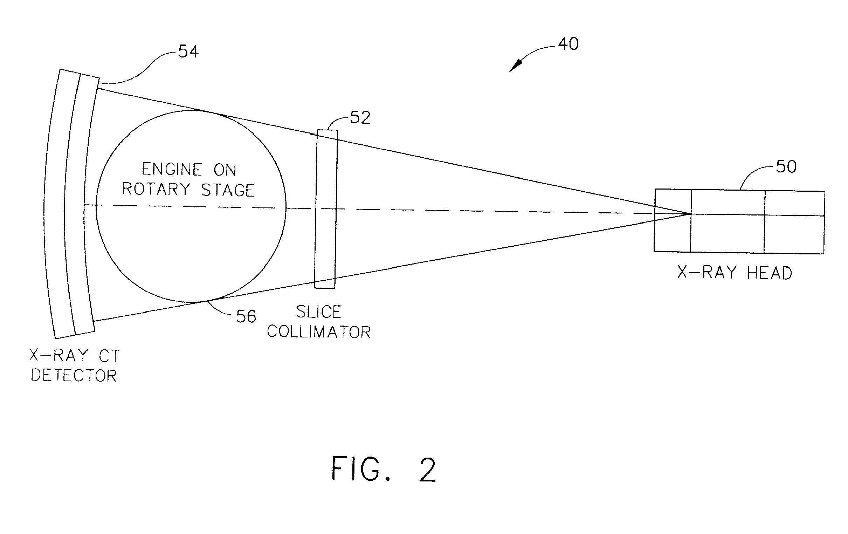

Figure 2 is a block diagram of a system 40 for non-destructive examination of an assembly. System 40 is described herein as being used for non-destructive examination of an assembly, for example a turboshaft engine. Although described herein as applied to an engine, system 40 may be used for examination of any type of assembly that includes a plurality of components. In the exemplary embodiment, system 40 includes a radiation source, for example, an X-ray head 50, a slice collimator 52, and a computed tomography (CT) detector, for example, X-ray CT detector 54. System 40 also includes a rotary stage 56, on which the engine, or portion of the engine to be examined, is placed, and rotated in the presence of X-rays produced by X-ray head 50.

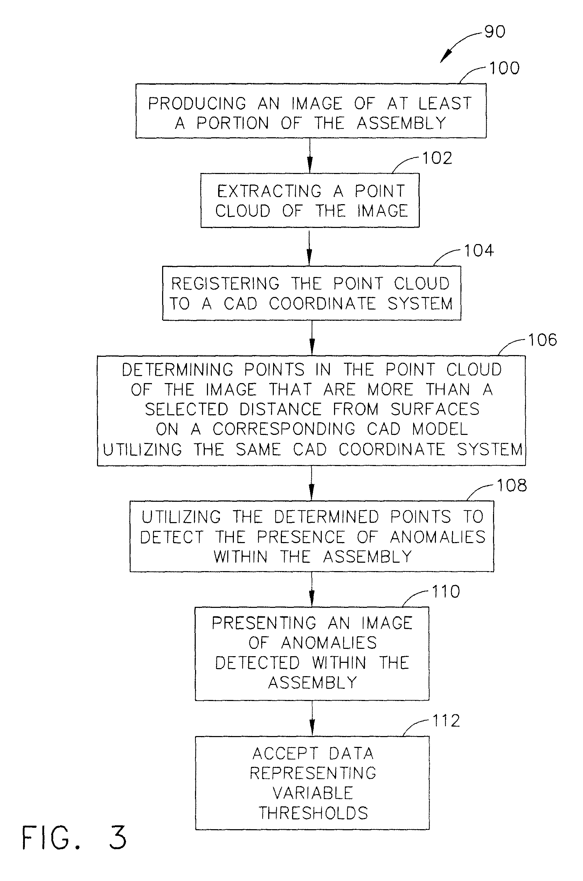

Figure 3 is a flow chart 90 of a method for non-destructive examination of an assembly. The method is described herein as a method for non-destructive examination of an engine, for example a turboshaft engine. Although described herein as applied to an engine, the methods described herein may be used for examination of any type of assembly that includes a plurality of components. In the exemplary embodiment, non-destructive examination device 10 and system 40 are configured to perform the method shown in Figure 3. In the exemplary embodiment, computer 12 (shown in Figure 1) is configured, such as via instructions recorded on medium or media 22 (shown in Figure 1), to produce 100 an image of at least a portion of the engine. In some configurations, producing an image of at least a portion of the engine comprises producing a computed tomographic (CT) image of the engine. The CT image may include, for example, a helically scanned volumetric image. In the exemplary embodiment, producing 100 the image includes producing a 3-D image of the portion of the engine. In other embodiments, producing 100 the image may include producing a 2-D image of the portion of the engine.

In the exemplary embodiment, the method also includes extracting 102 a point cloud of the image, for example, configuring device 10 to extract 102 a point cloud from the image of at least a portion of the assembled engine. The method also includes registering 104 the point cloud to a CAD coordinate system and determining 106 points in the point cloud of the image that are more than a selected distance from surfaces on a CAD model of the portion of the engine using the same CAD coordinate system. The determined points are utilized 108 to detect the presence of anomalies within the engine. The method may also include configuring computer 12 to present 110 an image of anomalies detected within the engine to an operator. Also in some configurations, device 10 (shown in Figure 1) is further configured to accept 112 data representing variable thresholds (for example, via a keyboard 18) for extracting the point clouds and tolerances for selecting the selected distance.

In some embodiments, a machine-readable medium or media 22 (shown in Figure 1) is provided having recorded thereon instructions configured to instruct a computer 12 (shown in Figure 1) to register 104 the point cloud to a CAD coordinate system, determine 106 points in the point cloud of the image that are more than a selected distance from surfaces on a CAD model of the portion of the engine using the same CAD coordinate system, and utilize 108 the determined points to detect the presence of anomalies within the engine.

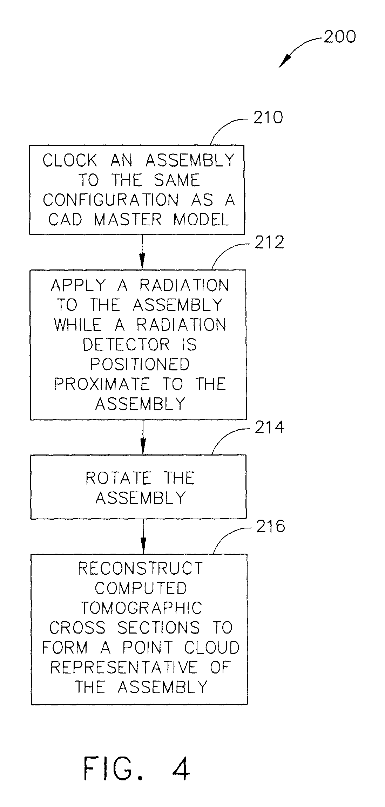

Figure 4 is a flow chart 200 of a method for extracting a point cloud from an assembly being examined. In the exemplary embodiment, the method includes clocking 210 the assembly to an initial orientation that matches a predetermined initial orientation of a CAD master model. Clocking 210 the assembly facilitates aligning an image produced during scanning of the assembly and a CAD model of the assembly stored in a memory, for example, in memory 16 (shown in Figure 1). The method also includes applying 212 a radiation to the assembly while a radiation detector is positioned proximate to the assembly and rotating 214 the assembly. For example, X-ray head 50 (shown in Figure 2) is configured to apply 212 X-ray radiation to the assembly. The method also includes reconstructing 216 CT cross sections to form a point cloud representative of the assembly.

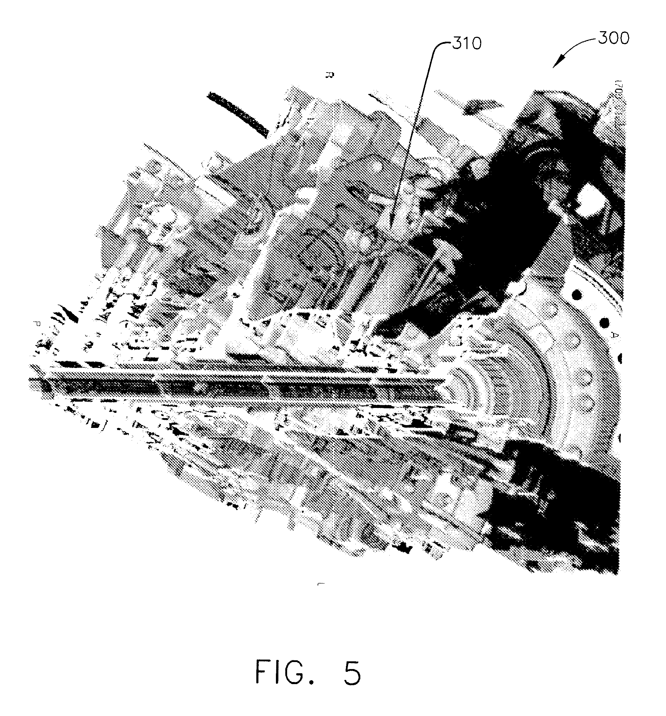

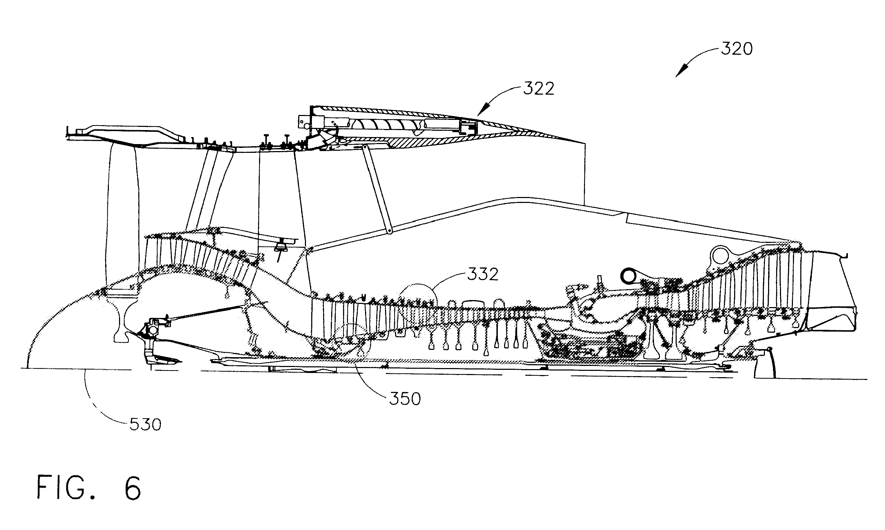

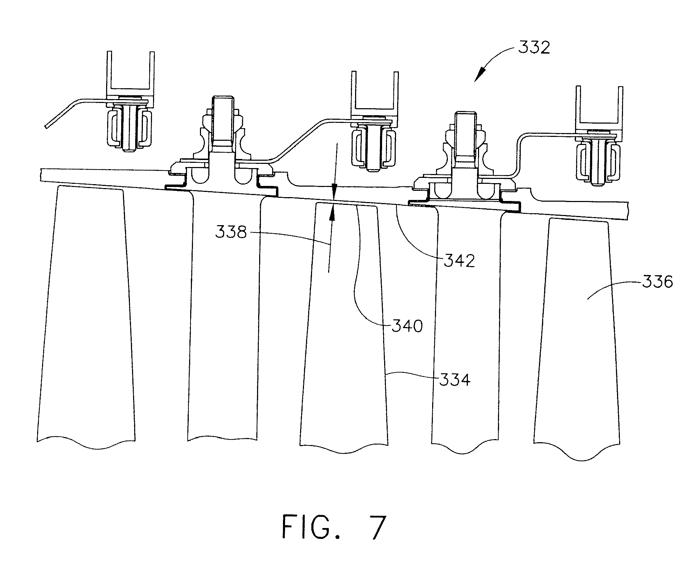

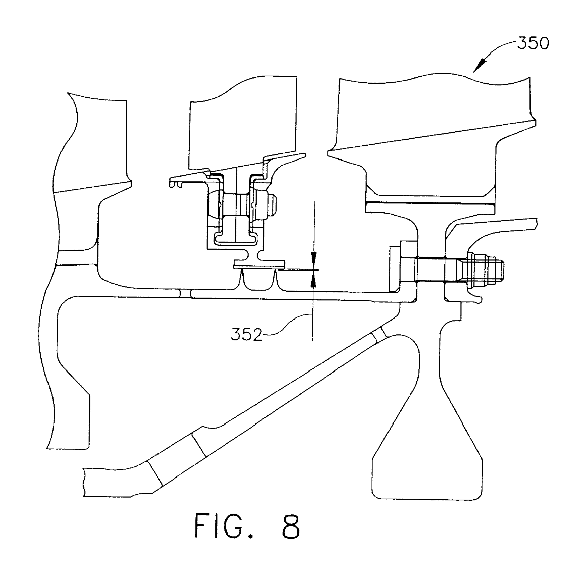

Figure 5 is an example of a 3-D image 300 produced using the systems and methods described herein. In the exemplary embodiment, a tip clearance 310 is an example of a dimension that can be analyzed using the systems and methods described herein. Figure 6 is an example of a two-dimensional image 320 of a portion of an engine 322. Figure 7 is an expanded view of a first portion 332 (shown in Figure 6) of image 320. Engine 322 includes a plurality of turbine blades, for example, turbine blades 334 and 336. A tip clearance 338 is a distance between a tip 340 of turbine blade 334 and a tip seal 342. Figure 8 is an expanded view of a second portion 350 (shown in Figure 6) of image 320. Second portion 350 illustrates a seal clearance 352 within engine 322 (shown in Figure 6). Seal clearance 352 and tip clearance 338 (shown in Figure 7) are examples of clearances defined between components of engine 322.

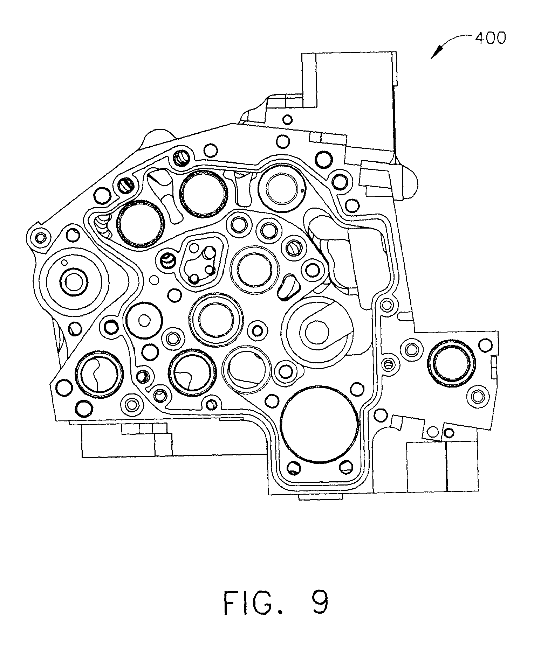

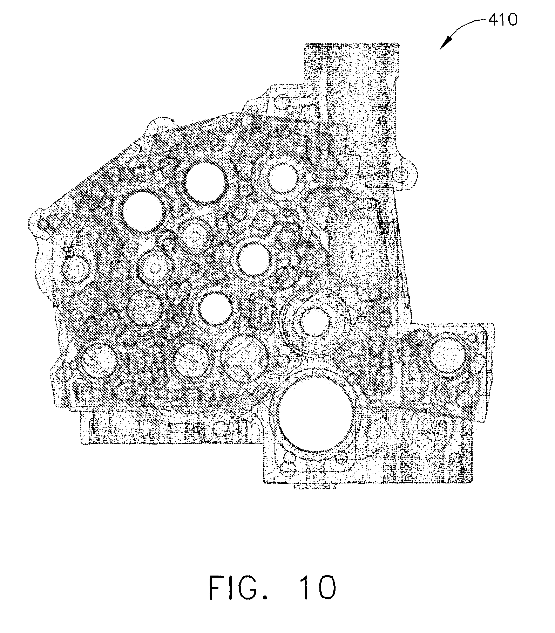

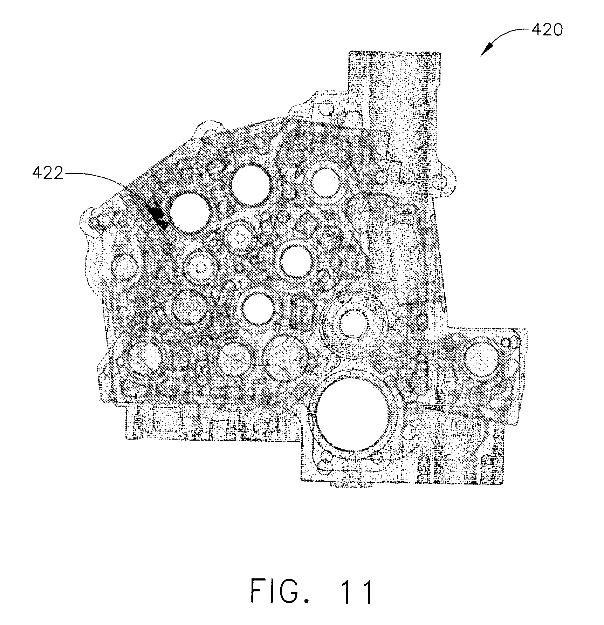

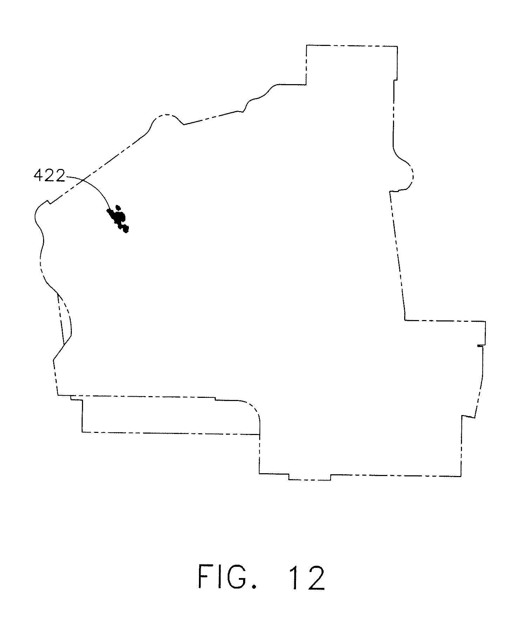

Figure 9 is an example of a CAD model 400 of an engine component. Figure 10 is a point cloud 410 produced using the systems and methods described herein of a first sample of the engine component shown in CAD model 400 (shown in Figure 9). Figure 11 is a point cloud 420 produced using the systems and methods described herein of a second sample of the engine component shown in CAD model 400 (shown in Figure 9). Figure 12 is an image of an anomaly 422 detected in the second sample of the engine component.

More specifically, CAD model 400 (shown in Figure 9) is a CAD drawing of a complex aircraft component. Point cloud 410 (shown in Figure 10) was extracted from 3-D images of the first sample of the component in CAD model 400 (shown in Figure 9). By comparing the point cloud 410 to CAD model 400, it is determined that the first sample has no anomalies. In contrast, point cloud image 420 (shown in Figure 11) was extracted from 3-D images of the second sample of the component in CAD model 400 (shown in Figure 9), and indicates that the second sample contains anomaly 422. When points less than a predetermined distance from any surface in CAD model 400 are removed, the remaining points, shown in Figure 12, illustrate anomaly 422.

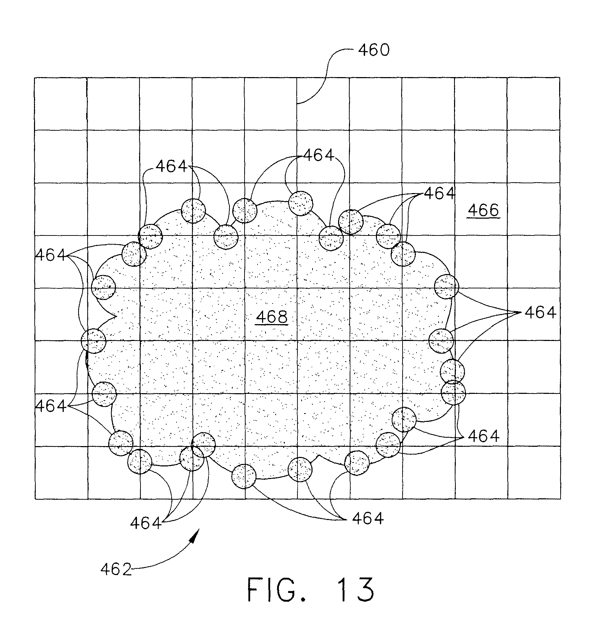

Figure 13 illustrates a method for creating a point cloud in two dimensions. The method can be extended in a third, perpendicular dimension to accommodate 3-D images, but is illustrated in 2-D for simplicity. A perpendicular grid 460 representing x and y directions (in 3-D, a z-direction is also used) is superimposed on an image 462 of a component, which in this example, is shown as an irregularly shaped image. The point cloud is determined as a set of points 464 that correspond to intersections of boundaries of contrasting regions 466, 468 with grid 460.

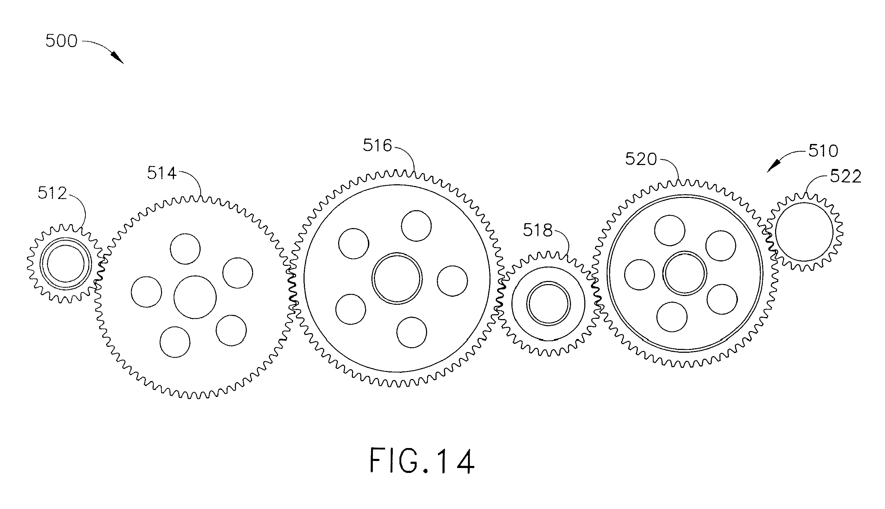

Figure 14 is an illustration of an image 500 of a portion of an assembled engine. In the exemplary embodiment, a computer, for example, computer 12 (shown in Figure 1) is configured to produce 100 (shown in Figure 3) image 500 of at least a portion of the assembly being examined using the systems and methods described herein. Computer 12 is further configured to isolate a portion of the assembly, for example, to isolate a set of gears 510. Set of gears 510 includes first gear 512, second gear 514, third gear 516, fourth gear 518, fifth gear 520, and sixth gear 522. Producing 100 (shown in Figure 3) image 500, and comparing it to a CAD model facilitates detecting not only anomalies in each individual component of the assembly (i.e., first, second, third, fourth, fifth, and sixth gears 512, 514, 516, 518, 520, and 522), but also anomalies in a position of the individual components relative to other individual components, anomalies in a position of each individual component within the assembly, and the presence of foreign objects within the assembly.

More specifically, the exemplary embodiment, the systems and methods described herein facilitate determining if the relative positions of first gear 512 and second gear 514 correspond to the relative positions of first gear 512 and second gear 514 as shown in a CAD model of gear set 510. The systems and methods described herein also facilitate detecting the presence of a foreign object in the assembly, for example, a loose piece of metal that may damage first, second, third, fourth, fifth, or sixth gear 512, 514, 516, 518, 520, or 522 if not removed before operation of gear set 510.

The systems and methods described herein can be used to detect anomalies in assembled aircraft engines, including, but not limited to inspection of tip clearances, stator vane rigging, and sensor placement within an engine. By cutting various angled cross sections through an engine center line 530 (shown in Figure 6), a straightness or run out of rotating components may be evaluated. The systems and methods described herein produce a full 3-D model of the engine, and multiple geometric features may be extracted from the 3-D model. Although the system and methods described herein are particularly suitable for aircraft engines, their uses are not limited to aircraft engines and may be used to examine other types of engines as well as assemblies unrelated to aviation. It will be appreciated that systems and methods described herein facilitate production of quality complex assemblies in a reliable and cost effective manner.

Various aspects and embodiments of the present invention are defined by the following numbered clauses:
1. A method for non-destructive examination of components within an assembly, said method comprising:
   producing an image of at least a portion of the assembly;
   extracting a point cloud of the image;
   registering the point cloud to a CAD coordinate system;
   determining points in the point cloud of the image that are more than a selected distance from surfaces on a corresponding CAD model utilizing the same CAD coordinate system; and
   utilizing the determined points to detect the presence of anomalies within the assembly.
2. A method in accordance with Clause 1 wherein producing the image of at least a portion of the assembly comprises producing a 3-D image of a plurality of engine components.
3. A method in accordance with Clause 2 wherein producing a 3-D image of a plurality of engine components comprises producing a 3-D image of at least one of a stator vane rigging, a turbine blade tip, and a sensor.
4. A method in accordance with Clause 2 wherein determining points in the point cloud of the image that are more than a selected distance from surfaces on the CAD model facilitates detecting at least one of an anomaly in a distance between the plurality of engine components, an anomaly in a position of a component within the engine, and the presence of a foreign object within the engine.
5. A method in accordance with Clause 1 further comprising presenting an image of anomalies to an operator.
6. A method in accordance with Clause 1 wherein producing the image comprises producing a computed tomographic (CT) image of the portion of the assembly.
7. A method in accordance with Clause 6 wherein said CT image is at least one of a helically scanned image and a volumetric helically scanned image.
8. A method in accordance with Clause 1 further comprising setting variable thresholds for extracting said point clouds and tolerances for selecting distance.
9. A method in accordance with Clause 1 wherein extracting the point cloud comprises superimposing a perpendicular grid on the image, and determining points using intersections of grid lines with contrast boundaries of the image.
10. A method in accordance with Clause 1 wherein the engine is a turboshaft engine.
11. A system for non-destructive examination of components within an assembly, said system comprising a computer having a display and memory, said computer configured to:
   extract a point cloud from an image of at least a portion of the assembly;
   register the point cloud to a CAD coordinate system;
   determine points in the point cloud of the image that are more than a selected distance from surfaces on a CAD model of the assembly utilizing the same CAD coordinate system; and
   utilize the determined points to detect the presence of anomalies within the assembly.
12. A system in accordance with Clause 11 wherein said computer is further configured to present an image of anomalies in the assembly to an operator.
13. A system in accordance with Clause 11 wherein the portion of the assembly comprises a plurality of components.
14. A system in accordance with Clause 13 wherein points in the point cloud of the image that are more than the selected distance from surfaces on the CAD model identify anomalies in distances between the plurality of components.
15. A system in accordance with Clause 11 wherein the presence of anomalies comprises at least one of the presence of an anomaly in a size of a component, the presence of an anomaly in a distance between two components, the presence of a foreign object, and the presence of an anomaly in a position of a component within the assembly.
16. A system in accordance with Clause 11 further configured to accept data representing variable thresholds for extracting said point clouds and tolerances for selecting said selected distance.
17. A machine-readable medium having recorded thereon instructions configured to instruct a computer to:
   extract a point cloud from an image of at least a portion of an assembly;
   register the point cloud to a CAD coordinate system;
   determine points in the point cloud of the image that are more than a selected distance from surfaces on a CAD model of the engine utilizing the same CAD coordinate system; and
   utilize the determined points to detect the presence of anomalies within the assembly.
18. A machine-readable medium in accordance with Clause 17 wherein to extract a point cloud from the image of at least a portion of the assembly, said instructions include instructions configured to instruct the computer to extract the point cloud from the image of a plurality of components assembled to form the assembly.
19. A machine-readable medium in accordance with Clause 18 wherein to utilize the determined points, said instructions include instructions configured to instruct a computer to determine at least one of the presence of an anomaly in a size of a component, the presence of an anomaly in a distance between two components, the presence of a foreign object, and the presence of an anomaly in a position of a component within the assembly.
20. A machine-readable medium in accordance with Clause 17 having recorded thereon instructions configured to instruct a computer to provide a display of detected anomalies to an operator.

## Claims

1. A system (40) for non-destructive examination of components within an assembly, said system comprising a computer having a display (14) and memory (16), said computer (12) configured to:
extract a point cloud (410,420) from an image of at least a portion of the assembly (102);
register the point cloud to a CAD coordinate system (104);
determine points in the point cloud of the image that are more than a selected distance from surfaces on a CAD model (400) of the assembly utilizing the same CAD coordinate system (106); and
utilize the determined points (464) to detect the presence of anomalies within the assembly.

2. A system (40) in accordance with Claim 1, wherein said computer (12) is further configured to present an image of anomalies in the assembly to an operator.

3. A system (40) in accordance with Claim 1 or 2, wherein the portion of the assembly comprises a plurality of components.

4. A system (40) in accordance with Claim 3, wherein points in the point cloud (410,420) of the image that are more than the selected distance from surfaces on the CAD model (400) identify anomalies in distances between the plurality of components.

5. A system (40) in accordance with any one of the preceding Claims, wherein the presence of anomalies comprises at least one of the presence of an anomaly in a size of a component, the presence of an anomaly in a distance between two components, the presence of a foreign object, and the presence of an anomaly in a position of a component within the assembly.

6. A system (40) in accordance with any one of the preceding Claims, further configured to accept data representing variable thresholds for extracting said point clouds (410,420) and tolerances for selecting said selected distance.

7. A machine-readable medium (22) having recorded thereon instructions configured to instruct a computer (12) to:
extract a point cloud (410,420) from an image of at least a portion of an assembly;
register the point cloud to a CAD coordinate system;
determine points in the point cloud of the image that are more than a selected distance from surfaces on a CAD model (400) of the engine utilizing the same CAD coordinate system; and
utilize the determined points (464) to detect the presence of anomalies within the assembly.

8. A machine-readable medium (22) in accordance with Claim 7, wherein to extract a point cloud (410,420) from the image of at least a portion of the assembly, said instructions include instructions configured to instruct the computer to extract the point cloud from the image of a plurality of components assembled to form the assembly.

9. A machine-readable medium (22) in accordance with Claim 8, wherein to utilize the determined points (464), said instructions include instructions configured to instruct a computer (12) to determine at least one of the presence of an anomaly in a size of a component, the presence of an anomaly in a distance between two components, the presence of a foreign object, and the presence of an anomaly in a position of a component within the assembly.

10. A machine-readable medium (22) in accordance with any of Claims 7 to 9, having recorded thereon instructions configured to instruct a computer (12) to provide a display (14) of detected anomalies to an operator.

11. A method for non-destructive examination of components within an assembly, said method comprising:
producing an image of at least a portion of the assembly;
extracting a point cloud of the image;
registering the point cloud to a CAD coordinate system;
determining points in the point cloud of the image that are more than a selected distance from surfaces on a corresponding CAD model utilizing the same CAD coordinate system; and
utilizing the determined points to detect the presence of anomalies within the assembly.

12. A method in accordance with Claim 11, wherein producing the image of at least a portion of the assembly comprises producing a 3-D image of a plurality of engine components.

13. A method in accordance with Claim 12, wherein producing a 3-D image of a plurality of engine components comprises producing a 3-D image of at least one of a stator vane rigging, a turbine blade tip, and a sensor.

14. A method in accordance with Claim 12, wherein determining points in the point cloud of the image that are more than a selected distance from surfaces on the CAD model facilitates detecting at least one of an anomaly in a distance between the plurality of engine components, an anomaly in a position of a component within the engine, and the presence of a foreign object within the engine.

15. A method in accordance with any of Claims 11 to 14, further comprising presenting an image of anomalies to an operator.
